Europäisches Patentamt

European Patent Office

Office européen des brevets

(19)

(11) Veröffentlichungsnummer : **0 113 399**
**B1**

(12) # EUROPÄISCHE PATENTSCHRIFT

(45) Veröffentlichungstag der Patentschrift :
25.03.87

(21) Anmeldenummer : 83110357.7

(22) Anmeldetag : 18.10.83

(51) Int. Cl.⁴ : **H 01 M 2/06, H 01 M 2/08**

(54) **Gas- und flüssigkeitsdichte Abdichtung des metallischen Poles eines Akkumulators.**

(30) Priorität : **15.12.82 DE 8235188 U**

(43) Veröffentlichungstag der Anmeldung :
**18.07.84 Patentblatt 84/29**

(45) Bekanntmachung des Hinweises auf die Patenterteilung : **25.03.87 Patentblatt 87/13**

(84) Benannte Vertragsstaaten :
**AT BE DE FR GB IT SE**

(56) Entgegenhaltungen :
**DE-A- 2 757 568**
**DE-A- 3 035 842**
**DE-A- 3 037 143**

(73) Patentinhaber : **ACCUMULATORENFABRIK SON-NENSCHEIN GMBH**
**Thiergarten Postfach 1180**
**D-6470 Büdingen 1 Oberhessen (DE)**

(72) Erfinder : **Kugler, Wolfgang**
**Hanauer Strasse 24**
**D-6474 Ortenberg 9 (DE)**

(74) Vertreter : **Baumann, Eduard, Dipl.-Phys.**
**Postfach 1201 Sattlerstrasse 1**
**D-8011 Höhenkirchen/München (DE)**

## Beschreibung

Gas- und flüssigkeitsdichte Abdichtung des metallischen Poles eines Akkumulators.

Die Erfindung bezieht sich auf eine gas- und flüssigkeitsdichte Abdichtung des metallischen Poles eines Akkumulators gemäß dem Oberbegriff des Anspruches 1.

Trotz einer großen Anzahl von Entwicklungen ist es noch nicht gelungen, eine Polabdichtung zu realisieren, welche unter allen Einsatzbedingungen gleich zuverlässig arbeitet und bei der der Aufwand in vernünftigen Grenzen bleibt. Insbesondere ist dem Umstand Rechnung zu tragen, daß die Elektrodenplatten unter bestimmten Betriebsbedingungen und fortgeschrittener Lebensdauer an Höhe zunehmen, was als Plattenwachstum bezeichnet wird. Ein weiteres Problem besteht darin, daß der Elektrolyt, im allgemeinen ein schwefelsäure-haltiger Elektrolyt, gegen viele Abdichtungsmittel sehr aggressiv ist. Um eine gleitende Abdichtung zum Pol hin selbst zu bewirken, wäre eine aufwendige mechanische Nachbehandlung des Poles erforderlich, um eine exakte Gleitfläche, etwa für O-Ringe, zu bilden.

Um dies zu vermeiden, wurde unter anderem vorgeschlagen, eine den Pol umgebende metallische Polbuchse am oberen Ende mit diesem zu verschweißen und die Außenfläche dieser entsprechend glatten Polbuchse gegen die Innenfläche einer Polwanne, die einstückig mit dem Kunststoffdeckel ausgebildet ist, abzudichten.

Das Verschweißen der Polbuchse mit dem Pol ergibt keine genaue Achsparallelität zwischen Pol und Polbuchse. Aus diesem Grunde ergeben sich erhebliche Abdichtungsprobleme der Außenfläche der Polbuchse mit der Innenfläche der Polwanne. Abgesehen davon ist das dafür verwendbare Material, im Falle von Bleiakkumulatoren Blei, schwer und teuer. Darüberhinaus ist der erforderliche Schweißvorgang aufwendig.

Aus der DE-A-3 037 143 ist eine Abdichtung der eingangs geschilderten Art bekannt, wobei ein zylindrischer Einsatzring in Form einer Metallhülse mit dem oberen Außenumfang des Poles verschweißt ist. In Richtung Gehäuseinneres ist bei diesem Einsatzring zum Pol hin ein ringförmiger Hohlraum vorgesehen. Dieser Hohlraum ist wie das untere Ende des Einsatzringes und der gesamte Außendurchmesser desselben mit einem Dichtungsmaterial aus elastischem, federndem Material umgeben und mit diesem fest verbunden. Das Dichtmaterial soll gegen den Innenumfang der Polwanne eine bewegliche Abdichtung erreichen.

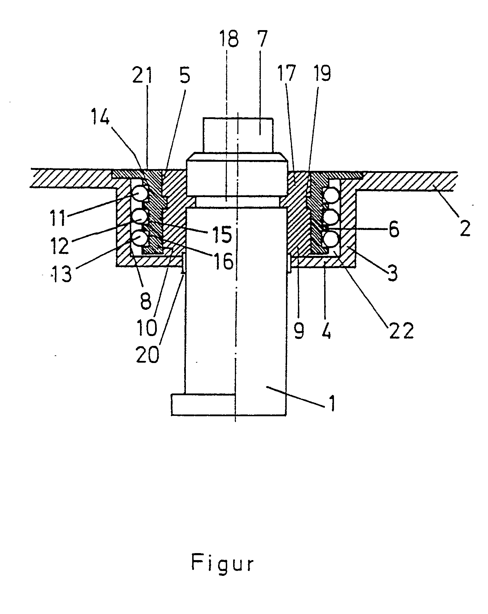

Aus der DE-A-2 757 568, Figur 2, ist ein O-förmiger Abdichtungsring zwischen Gehäusedurchtrittsöffnung und einer Kunststoffummantelung bekannt, die mit dem Umfang des Bleipoles starr verbunden ist. Aus der DE-A-3 035 842 ist eine Polabdichtung zwischen einer Polwanne und dem Bleipol bekannt, wobei übereinander mehrere Schichten vorgesehen sind, nämlich eine untere Schicht aus Hartverguß, eine daran angrenzende mittlere Schicht aus thermoplastischem, dauerelastischem, säurebeständigem Kunststoff, und eine daran angrenzende obere Schicht aus Hartverguß.

Sämtliche Abdichtungen weisen Nachteile auf, wie eingangs geschildert. Der Erfindung liegt die Aufgabe zugrunde, eine Abdichtung gemäß dem Oberbegriff des Anspruches 1 so auszubilden, daß die angeführten Nachteile des Standes der Technik vermieden werden und die Abdichtung zwischen Pol und Kunststoffdeckel bei Vermeidung einer metallischen Polbuchse verbessert wird.

Die Aufgabe wird erfindungsgemäß durch die Merkmale des Kennzeichens des Anspruches 1 gelöst. Weitere Ausbildungen der Erfindung sind in den Unteransprüchen dargestellt.

Die Grundidee der Erfindung besteht in einem Einsatzring zwischen einer Polwanne innerhalb der Kunststoffdeckels und dem durch den Boden der Polwanne hindurchgeführten metallischen Pol, wobei die Innenseite des Einsatzringes starr und gasdicht mit der Poloberfläche verbunden ist und wobei die Außenfläche des Einsatzringes gleitend mit der Innenfläche der Polwanne abdichtet.

Zweckmäßigerweise besteht die innere Abdichtung aus einem hochviskosen 2-Komponenten-Verguß, der von der Firma Ciba-Geigy AG, Basel, unter der Bezeichnung XW 463 A im Handel ist. Die äußere Abdichtung besteht aus vorzugsweise drei O-Ringen, die in Führungsnuten der Außenfläche des Einsatzringes unter Vorspannung geführt sind und an die Innenfläche der Polwanne drücken. Als Material für den Einsatzring soll ein Kunststoff gewählt werden, der eine möglichst gute Haftung mit der verwendeten Vergußmasse aufweist. Dazu eignen sich beispielsweise nicht Polyäthylen oder Polypropylen, Materialien, aus denen üblicherweise das Zellengehäuse besteht, jedoch ABS- oder Acryl-Butadien-Styrol-Kopolymerisat, das beispielsweise von der deutschen Firma BASF unter dem Namen Luran erhältlich ist.

Es zeigte sich, daß die genannte Konstruktion zu einer sehr guten Abdichtung, auch bei längerem Betrieb und den unterschiedlichsten Einsatzbedingungen führt, wobei die erforderliche axiale Bewegungsfreiheit für den Bleipol besteht. Darüberhinaus bestehen gegenüber anderen bekannten Verfahren folgende Vorteile :

besonders einfacher Aufbau und einfache Herstellung, da nur ein einziger Verguß erforderlich ist,

eine genaue Einhaltung der Schichthöhen verschiedener Schichten, wie bei einer Mehrfach-Verguß-Polabdichtung entfällt,

ein Plattenwachstum und als Folge davon eine Verschiebung des Poles nach außen beeinträchtigt wegen der beweglichen O-Ring-Abdichtung nicht die Dichtungsqualität,

der Aufbau der Abdichtung ist völlig unabhängig vom verwendeten Kasten-material, eine mechanische Bearbeitung der Poloberfläche entfällt.

Ein Ausführungsbeispiel der Erfindung ist in der einzigen Figur dargestellt.

Die dargestellte Figur zeigt einen Querschnitt durch einen Kunststoffdeckel nebst Abdichtung und durchgeführtem Pol.

In der Figur ist der Pol mit 1, der Kunststoffdeckel mit 2 und die einstückig mit dem Kunststoffdeckel 2 ausgebildete, sich ins Akkumulatorinnere erstreckende Polwanne mit 3 bezeichnet. In der Mitte der Polwanne 3 ist der Pol 1 durch den Boden 4 hindurch nach außen geführt.

Die Abdichtung des Poles 1 gegenüber der Polwanne 3 wird durch einen Einsatzring 10 bewirkt, der einen inneren Raum 9 und einen äußeren Raum 22 mit etwa gleicher Dicke abteilt. Der innere abgeteilte Ring ist durch einen 2-Komponenten-Epoxidharzverguß 17 ausgefüllt, der sich im übrigen auch in eine Ringnut 18 des Poles 1 erstreckt und andererseits um eine radial nach innen ragende Ringrippe 19 des Einsatzteiles 10 herumgeführt ist.

Die Außenabdichtung des Einsatzteiles 10 gegenüber der Innenfläche 8 der Polwanne 3 wird durch drei untereinander angeordnete O-Ringe 11, 12, 13 bewirkt, welche in entsprechenden Ringnuten 14, 15, 16 an der Außenfläche 6 des Einsatzringes 10 geführt sind.

An der Durchtrittsstelle des Poles 1 in der zentralen Öffnung des Bodens 4 ist ein. Abdichtring 20, vorzugsweise aus säurebeständigem Gummi, angebracht, der eine zusätzliche Abdichtung für den Epoxidharzverguß darstellen soll, jedoch das Gleiten des Poles 1 erleichtern soll. Der obere Rand des Einsatzteiles 10 weist einen radial nach außen sich erstreckenden ebenen Außenrand 21 auf, der in entsprechenden (nicht bezeichneten) ringförmigen Aussparungen des kunststoffdeckels 2 derart hineinpaßt, daß Außenfläche des Einsatzringes 10 und Oberfläche des Kunststoffdeckels 2 eine Ebene bilden.

## Patentansprüche

1. Gas- und flüssigkeitsdichte Abdichtung des metallischen Poles (1) eines Akkumulators, insbesondere des Bleipoles eines Bleiakkumulators, gegen den Kunststoffdeckel (2), mit einer mit dem Kunststoffdeckel fest verbundenen oder einstückig mit ihm ausgebildeten Polwanne (3), durch deren Boden (4) der Pol (1) nach außen geführt ist, und einem Einsatzring (10) zwischen metallischem Pol (1) und Polwanne (3), dessen zylindrische Innenfläche (5) wenigstens teilweise starr mit der Poloberfläche (7) verbunden ist, und dessen Außenfläche (6) gegen die Innenfläche (8) der Polwanne (3) beweglich abdichtet, dadurch gekennzeichnet, daß zur Erzielung einer starren gas- und flüssigkeitsdichten Verbindung zwischen Poloberfläche (7) und Innenfläche (5) des Einsatzringes (10) ein Epoxydharzverguß vorgesehen ist.

2. Abdichtung nach Anspruch 1, dadurch gekennzeichnet, daß der Epoxydharzverguß ein Zwei-Komponenten-Verguß ist.

3. Abdichtung nach Anspruch 1, dadurch gekennzeichnet, daß die vorgesehene vertikal- bewegliche Abdichtung zwischen Außenfläche (6) und Innenfläche (8) der Polwanne (3) aus wenigstens einem, vorzugsweise drei O-Abdichtungsringen (11, 12, 13) aus Gummi oder Kunststoff besteht, die in entsprechenden Umfangsnuten (14, 15, 16) an der Innenfläche (8) der Polwanne (3) oder vorzugsweise an der Außenfläche (6) des Einsatzringes (10) geführt sind, um eine gleitende Abdichtung des Einsatzringes (10) gegen die Polwanne (3) zu erreichen.

4. Abdichtung nach Anspruch 2, gekennzeichnet durch einen mehrere mm breiten Ringraum (9) zwischen Poloberfläche (7) und Einsatzring (10) für den Einsatz eines hochviskosen 2-Komponenten-Vergusses.

5. Abdichtung nach einem der Ansprüche 1 bis 4, gekennzeichnet durch einen Einsatzring (10) aus Kunststoff, vorzugsweise einem mit dem 2-Komponenten-Epoxidharzverguß gemäß Anspruch 3 oder 4 eine gute Haftverbindung eingehenden Kunststoff, vorzugsweise ein Acryl-Butadien-Styrol-Kopolymerisat.

6. Abdichtung nach einem der Ansprüche 1 bis 5, gekennzeichnet durch wenigstens eine Ringnut (18) an der Poloberfläche (7) sowie vorzugsweise einer Ringrippe (19) an der Innenfläche (5) des Einsatzringes (10) zur Aufnahme der Vergußmasse (17), um eine achsstarre Verbindung zu erzielen.

7. Abdichtung nach einem der Ansprüche 1 bis 6, gekennzeichnet durch einen Abdicht- und Gleitring (20), vorzugsweise aus säurebeständigem Gummi an der Poldurchführung gegen die Durchtrittsöffnung des Bodens (4) der Polwanne (3).

8. Abdichtung nach einem der Ansprüche 1 bis 7, gekennzeichnet durch einen ebenen, sich radial nach außen erstreckenden Außenrand (21) des Einsatzteiles (10), der in eine entsprechende Aussparung des Kunststoffdeckels (2) paßt, so daß die Außenfläche des Einsatzringes (10) mit der Außenfläche des Kunststoffdeckels (2) eine Ebene bildet.

## Claims

1. A gas and liquid tight sealing assembly for the metallic pole (1) of a storage battery, especially the lead pole of a lead-acid storage battery, relative to the plastics cover (2), comprising a pole trough (3) which is either firmly joined to the plastics cover or formed integrally therewith, the pole (1) being extended to the outside through the bottom (4) of said trough, and comprising a replaceable ring (10) intermediate said metallic pole (1) and said pole trough (3), the cylindrical inner surface (5) of said ring being at least in part rigidly joined to the pole surface (7) and the outer surface (6) thereof being in movable sealing engagement with the inner surface (8) of said pole trough (3), characterised in that an epoxy-resin casting compound is provided between pole surface (7) and inner surface (5) of said replaceable ring (10) to obtain a rigid gas and liquid tight joint.

2. A sealing assembly as claimed in claim 1, characterised in that said epoxy-resin casting compound is a two-component casting compound.

3. A sealing assembly as claimed in claim 1, characterised in that the vertically movable seal provided between outer surface (6) and inner surface (8) of the pole trough (3) is formed of at least one, preferably of three, O-rings (11, 12, 13) made from rubber or synthetic material, said O-rings being guided in corresponding peripheral grooves (14, 15, 16) formed on the inner surface (8) of the pole trough (3) or, preferably, on the outer surface (6) of the replaceable ring (10) so as to obtain a sliding sealing engagement of the replaceable ring (10) against the pole trough (3).

4. A sealing assembly as claimed in claim 2, characterised by an annular space (9) having a width of several mm between pole surface (7) and replaceable ring (10) for the use of a high-viscosity two-component casting compound.

5. A sealing assembly as claimed in any of the claims 1 to 4, characterised by a replaceable ring (10) of synthetic material, preferably of a synthetic material capable of forming a good adhesive bond with the two-component epoxyresin casting compound according to claim 3 or claim 4, preferably of an acrylo-butadiene-styrene copolymer.

6. A sealing assembly as claimed in any of the claims 1 to 5, characterised by at least one annular groove (18) formed on the pole surface (7) and preferably and annular ridge (19) on the inner surface (5) of said replaceable ring (10) for receiving the casting compound (17) so as to achieve an axially rigid joint.

7. A sealing assembly as claimed in any of the claims 1 to 6, characterised by a sealing and sliding ring (20), preferably of an acid-resistant rubber, provided at the pole outlet against the through-hole in the bottom (4) of the pole trough (3).

8. A sealing assembly as claimed in any of the claims 1 to 7, characterised by a flat, radially outwardly extending outer rim (21) of the replaceable member (10) adapted to fit into a corresponding recess fromed in the plastics cover (2) so that the outer surface of the replaceable ring (10) is coplanar with the outer surface of the plastics cover (2).

**Revendications**

1. Etanchement étanche aux gaz et aux liquides du pôle métallique (1) d'un accumulateur, en particulier du pôle en plomb d'un accumulateur à plomb, contre le couvercle en matière plastique (2) comprenant une cuve (3) solidaire de ce couvercle ou ne formant qu'une seule pièce avec lui, dont le fond (4) est traversé par le pôle (1) pour parvenir à l'extérieur, et un anneau d'intercalage (10) disposé entre le pôle métallique (1) et la cuve du pôle (3) dont la surface intérieure cylindrique (5) est liée, du moins en partie, solidairement à la surface du pôle, et dont la surface extérieure (6) est étanchéifiée contre la surface intérieure (8) de la cuve du pôle (3) de façon à rester mobile par rapport à cette dernière, caractérisé par une masse coulée de résine époxy destinée à assurer une liaison rigide étanche aux gaz et aux liquides entre la surface du pôle (7) et la surface intérieure (5) de l'anneau d'intercalage (10).

2. Etanchement de pôle selon la revendication 1, caractérisé en ce que la masse coulée de résine époxy est une masse à deux composantes.

3. Etanchement de pôle selon la revendication 1, caractérisé en ce que le joint étanche mobile verticalement disposé entre la surface extérieure (6) de l'anneau d'intercalage et la surface intérieure (8) de la cuve du pôle (3) est composé d'au moins un, mais de préférence de trois anneaux d'étanchéité en O (11, 12, 13) en caoutchouc ou en matière plastique reposant dans des rainures de circonférence (14, 15, 16) pratiquées dans la surface intérieure (8) de la cuve du pôle (3) ou de préférence dans la surface extérieure (6) de l'anneau d'intercalage (10) afin de permettre un glissement de l'anneau d'intercalage (10) par rapport à la cuve du pôle (3).

4. Etanchement de pôle selon la revendication 2, caractérisé par un espace annulaire (9) d'une largeur de plusieurs mm entre la surface du pôle (7) et l'anneau d'intercalage (10) destiné à être rempli d'une masse coulée à deux composantes hautement visqueuse.

5. Etanchement de pôle selon les revendications 1 à 4, caractérisé par un anneau intercalaire (10) en matière plastique, de préférence une matière plastique adhérant bien à une masse de résine époxy à deux composantes selon la revendication 3 ou 4, de préférence une matière acrylique-butadique-styrolique copolymérisée.

6. Etanchement de pôle selon les revendications 1 à 5, caractérisé par au moins une rainure circulaire (18) pratiquée sur la surface du pôle (7) ainsi que de préférence une nervure circulaire (19) sur la surface intérieure (5) de l'anneau intercalaire (10) destinée à accueillir la masse coulée (17) afin d'obtenir une liaison axialement solidaire.

7. Etanchement de pôle selon les revendications 1 à 6, caractérisé par un anneau d'étanchement et de glissement (20), de préférence en caoutchouc résistant aux acides, placé dans le passage du pôle contre l'ouverture de passage pratiquée dans le fond (4) de la cuve du pôle (3).

8. Etanchement de pôle selon les revendications 1 à 7, caractérisé par un bord extérieur (21) de l'anneau d'intercalage (10), plat et s'étendant radialement vers l'extérieur s'adaptant dans un évidement correspondant du couvercle en matière plastique (2) de façon à ce que la surface extérieure de l'anneau d'intercalage (10) forme avec la surface extérieure du couvercle en matière plastique une surface plane.

Figur